# EUROPÄISCHE PATENTSCHRIFT

(11) **EP 1 403 592 B1**
(45) Veröffentlichungstag und Bekanntmachung des Hinweises auf die Patenterteilung: **06.04.2011**
(21) Anmeldenummer: 03021155.1
(22) Anmeldetag: 23.09.2003
(51) Int. Cl.: F24F 12/00, F24F 11/00, F28F 27/02

(54) **Luftaustauschsystem für die Belüftung wenigstens eines Raums eines Gebäudes**
Air-exchange system for the ventilation of at least one room in a building
Système de renouvellement d'air pour aérer au moins une pièce dans un bâtiment

(30) Priorität: 24.09.2002 DE 20214833 U
(43) Veröffentlichungstag der Anmeldung: 31.03.2004
(60) Teilanmeldung: 10185578.1
(73) Patentinhaber: Meltem Wärmerückgewinnung GmbH & Co. KG, 82239 Alling (DE)
(72) Erfinder: Reynartz, Armin, 82239 Alling (DE)
(74) Vertreter: Schweiger, Martin

(56) Entgegenhaltungen:
- WO-A-01/84057
- US-A- 5 024 263
- PATENT ABSTRACTS OF JAPAN Bd. 1999, Nr. 01, 29. Januar 1999 (1999-01-29) -& JP 10 267342 A (MATSUSHITA SEIKO CO LTD), 9. Oktober 1998 (1998-10-09)

## Beschreibung

Die Erfindung betrifft ein Luftaustauschsystem für die Belüftung wenigstens eines Raums eines Gebäudes mit wenigstens einer Luftaustauschvorrichtung.

Zur Gewährleistung gleichbleibend hoher Atemluftqualität in Wohn- und Arbeitsräumen von Gebäuden wird oft ein Luftaustausch mit der Umwelt erzwungen. Dabei wird kühlere, unverbrauchte Außenluft in das Gebäudeinnere gefördert und gleichzeitig wärmere, verbrauchte Abluft aus dem Gebäudeinneren nach draußen gefördert. Aus Energieeffizienzgründen kann die Wärmeenergie der Abluft dazu verwendet werden, um die hineinströmende Außenluft zu erwärmen.

Dabei kommen Wärmetauscher zum Einsatz, die Wärme in Richtung eines Temperaturgefälles zwischen den zwei Luftströmen übertragen. Es sind Rohrbündel-, Rippenrohr-, Platten-, Spiral-, Spiralrohr-Doppelmantel- und Wickelwärmetauscher bekannt. Solche Wärmetauscher sind häufig Bestandteile von Luftaustauschvorrichtungen, die auch als Rekuperatoren oder als Rekuperativgeräte bezeichnet werden.

Die WO 01/84057 A1 zeigt eine Belüftungseinrichtung zur Belüftung von Raum zu Raum oder von Bereich zu Bereich eines Gebäudes.

Bei Gebäudeabschnitten mit mehreren Räumen, bei denen ein Luftaustausch mittelt einer dezentralen Luftaustauschvorrichtung mit einem Wärmetauscher vorgenommen wird, ergibt sich oft das Problem, daß dieser Luftaustausch nicht zufriedenstellend ist. Besonders diejenigen Räume, in denen sich die Luftaustauschvorrichtung nicht unmittelbar befindet, werden häufig nur unzureichend mit frischer und unverbrauchter Luft versorgt.

Es ist daher Aufgabe der Erfindung, ein einfach handzuhabendes Luftaustauschsystem mit gutem Wirkungsgrad anzugeben, bei dem in allen zu belüftenden Räumen ein ausreichender Luftaustausch stattfindet.

Diese Aufgabe wird durch den Gegenstand der unabhängigen Ansprüche gelöst. Vorteilhafte Ausgestaltungen ergeben sich aus den jeweiligen Unteransprüchen.

Ein erfindungsgemäßes Luftaustauschsystem für die Belüftung wenigstens eines Raumes eines Gebäudes weist wenigstens zwei Luftaustauschvorrichtungen auf. Wenigstens eine von diesen Luftaustauschvorrichtungen beinhaltet ein Gehäuse, einen in dem Gehäuse angeordneten elektrischen Zuluft-Lüfter zur Förderung eines Zuluftstroms von einer Außenseite des Gebäudes in den bzw. in einen Raum des Gebäudes sowie einen in dem Gehäuse angeordneten Wärmetauscher. Das Luftaustauschsystem verfügt über wenigstens eine weitere Luftaustauschvorrichtung, die ein Gehäuse, einen in dem Gehäuse angeordneten elektrischen Fortluft-Lüfter zur Förderung eines Fortluftstroms aus dem bzw. aus einem Raum des Gebäudes auf die Außenseite des Gebäudes sowie einen in dem Gehäuse angeordneten Wärmetauscher aufweist. Durch die Abkühlseite der Wärmetauscher dieser Luftaustauschvorrichtungen fließt jeweils ein Fortluftstrom, durch die Erwärmseite der Wärmetauscher fließt jeweils ein Zuluftstrom.

Gemäß einem Grundgedanken der Erfindung sorgt jede in dem Luftaustauschsystem vorgesehene Luftaustauschvorrichtung bereits für sich allein genommen für einen Abtransport von verbrauchter Fortluft sowie für ein Einströmen von frischer Zuluft. Gemäß einem weiteren Grundgedanken der Erfindung entsteht eine Luftbewegung zwischen derjenigen Luftaustauschvorrichtung, die lediglich einen Zuluft-Lüfter aufweist und derjenigen Luftaustauschvorrichtung, die lediglich einen Fortluft-Lüfter umfaßt. Diese Luftbewegung ist von der Luftaustauschvorrichtung mit dem Zuluft-Lüfter zu der Luftaustauschvorrichtung mit dem Fortluft-Lüfter gerichtet. Durch diese Luftbewegung wird sichergestellt, daß auch Bereiche, die nicht in unmittelbarer Nähe der Luftaustauschvorrichtungen liegen, mit frischer Außenluft versorgt werden.

Durch ein derartiges Luftaustauschsystem wird ein zufriedenstellender Luftaustausch mit einem guten Wirkungsgrad erreicht.

Ein weiteres erfindungsgemäßes Luftaustauschsystem für die Belüftung wenigstens eines Raumes eines Gebäudes verfügt über wenigstens zwei Luftaustauschvorrichtungen der folgenden Art. Die Luftaustauschvorrichtung gliedert sich in ein Gehäuse, in einen in dem Gehäuse angeordneten elektrischen Zuluft-Lüfter zur Förderung eines Zuluftstroms von einer Außenseite des Gebäudes in den bzw. in einen Raum des Gebäudes, in einen weiteren in dem Gehäuse angeordneten elektrischen Fortluft-Lüfter zur Förderung eines Fortluftstroms aus dem bzw. aus einem Raum des Gebäudes auf die Außenseite des Gebäudes sowie in einen in dem Gehäuse angeordneten Wärmetauscher, durch dessen Erwärmseite der Zuluftstrom und durch dessen Abkühlseite der Abluftstrom fließt.

Ein Grundgedanke bei diesem erfindungsgemäßen Luftaustauschsystem besteht darin, daß bei wenigstens einer Luftaustauschvorrichtung der Zuluft-Lüfter und der Fortluft-Lüfter so einstellbar sind, daß der Zuluftstrom größer als der Fortluftstrom ausgebildet ist und daß bei wenigstens einer weiteren Luftaustauschvorrichtung der Zuluft-Lüfter und der Fortluft-Lüfter so einstellbar sind, daß der Fortluftstrom größer als der Zuluftstrom ausgebildet ist. Durch eine derartige Einstellbarkeit der Volumenströme der durch den Zuluft-Lüfter und durch den Fortluft-Lüfter geförderten Luftmengen kann der Luftaustausch der einzelnen Luftaustauschvorrichtungen und somit der Luftaustausch des Luftaustauschsystems individuell an die Umgebung angepaßt werden. Zusätzlich zu demjenigen Luftaustausch, den jede Luftaustauschvorrichtung für sich allein gesehen tätigt, wird eine Luftbewegung zwischen den einzelnen Luftaustauschvorrichtungen erzeugt. Dadurch wird ein Luftaustausch auch in denjenigen Bereichen sichergestellt, die sich nicht in unmittelbarer Umgebung einer der Luftaustauschvorrichtungen befinden.

Die Intensität der Luftbewegung zwischen den einzelnen Luftaustauschvorrichtungen kann durch eine Veränderung der Drehfrequenzen der Lüfter und/oder der Anstellwinkel der Lüfterblätter genau und bedarfsgerecht eingestellt werden.

Bei einer einfachen Version des erfindungsgemäßen Luftaustauschsystems, die zwei Luftaustauschvorrichtungen umfaßt, kann die erste Luftaustauschvorrichtung beispielsweise mit einem Verhältnis des Fortluftstromvolumens zum Zuluftstromvolumen von 40%/60% und die zweite Luftaustauschvorrichtung beispielsweise mit einem Verhältnis des Fortluftstromvolumens zum Zuluftstromvolumen von 60%/40% betrieben werden. Eine Richtungsänderung der Luftbewegung zwischen den Luftaustauschvorrichtungen kann dadurch erreicht werden, indem das Verhältnis des Fortluftstromvolumens zu dem Zuluftstromvolumen bei beiden Luftaustauschvorrichtungen umgekehrt wird.

Von der Erfindung sind auch Luftaustauschsysteme umfaßt, die drei oder mehr Luftaustauschvorrichtungen aufweisen. Solche Luftaustauschsysteme werden auch als Netzwerkversionen bezeichnet.

Die Erfindung betrifft auch ein vorstehend beschriebenes Luftaustauschsystem mit wenigstens einer Außenwand des Gebäudes. Dabei sind die Gehäuserückseiten der Luftaustauschvorrichtungen an wenigstens einer Außenwand des Gebäudes angebracht. An bzw. in der Außenwand sind Rohrverbindungen vorgesehen, die sich bis zu der Außenseite des Gebäudes erstrecken. Über diese Rohrverbindungen kann frische unverbrauchte Außenluft in die Luftaustauschvorrichtungen hinein und verbrauchte Fortluft aus den Luftaustauschvorrichtungen auf die Außenseite des Gebäudes gelangen. Mit derart angebrachten Luftaustauschvorrichtungen wird ein direkter und effektiver Luftaustausch der verbrauchten Abluft mit frischer Außenluft erreicht.

Gemäß einer ersten Ausführungsform der Erfindung ist wenigstens eine Luftaustauschvorrichtung an einer ersten Außenwand und wenigstens eine weitere Luftaustauschvorrichtung an einer zweiten Außenwand angebracht. Wenn diese beiden Wände einander gegenüberliegen, so wird der zwischen den beiden Wänden liegende Gebäudeabschnitt kontinuierlich mit frischer und erwärmter Zuluft versorgt.

Befinden sich die erste Außenwand sowie die zweite Außenwand in unterschiedlichen Räumen des Gebäudes, so werden die zwischen den beiden Außenwänden liegenden Räume des Gebäudes ebenfalls kontinuierlich mit frischer erwärmter Außenluft durchspült. Hierbei ist sicherzustellen, daß die Luftbewegung zwischen diesen Räumen nicht beispielsweise durch eine geschlossene Tür unterbrochen wird.

Wenn zwischen der ersten Außenwand und der zweiten Außenwand wenigstens ein Durchgang, insbesondere eine Treppe, eine Tür oder ein Korridor und/oder wenigstens ein weiterer Raum angeordnet ist, so werden diese ebenfalls kontinuierlich mit frischer erwärmter Außenluft versorgt. Dies wird auch als Querlüftung bezeichnet.

In einer vorteilhaften Weiterbildung der Erfindung sind die Luftaustauschvorrichtungen mit einer Steuerungseinheit, insbesondere mit einem Computer, verbunden. Über diese Steuerungseinheit können die Drehfrequenzen der Lüfterräder und/oder die Anstellwinkel der Lüfterblätter für die Zuluft-Lüfter und für die Fortluft-Lüfter der einzelnen Luftaustauschvorrichtungen individuell und präzise eingestellt werden.

Die Erfindung ist in den Zeichnungen anhand eines Ausführungsbeispiels näher veranschaulicht.
- Figur 1: zeigt eine schematische Darstellung einer Draufsicht auf eine Luftaustauschvorrichtung gemäß einem Ausführungsbeispiel,
- Figur 2: zeigt eine schematische, perspektivische Darstellung des in Figur 1 gezeigten Plattenwärmetauschers sowie eine grafische Veranschaulichung der den Plattenwärmetauscher durchfließenden Luftströme gemäß dem Ausführungsbeispiel,
- Figur 3: zeigt eine schematische Darstellung eines Querschnitts entlang der Schnittlinie A-A einer an einer Außenwand befestigten Luftaustauschvorrichtung gemäß dem Ausführungsbeispiel,
- Figur 4: zeigt eine schematische Darstellung eines Querschnitts entlang der Schnittlinie B-B der an der Außenwand befestigten Luftaustauschvorrichtung gemäß dem Ausführungsbeispiel, und
- Figur 5: zeigt einen schematischen Grundriß eines Gebäudeabschnitts mit drei an der Innenseite einer Außenwand dieses Gebäudeabschnitts befestigten in Figur 1 gezeigten Luftaustauschvorrichtungen gemäß einem ersten Ausführungsbeispiel.

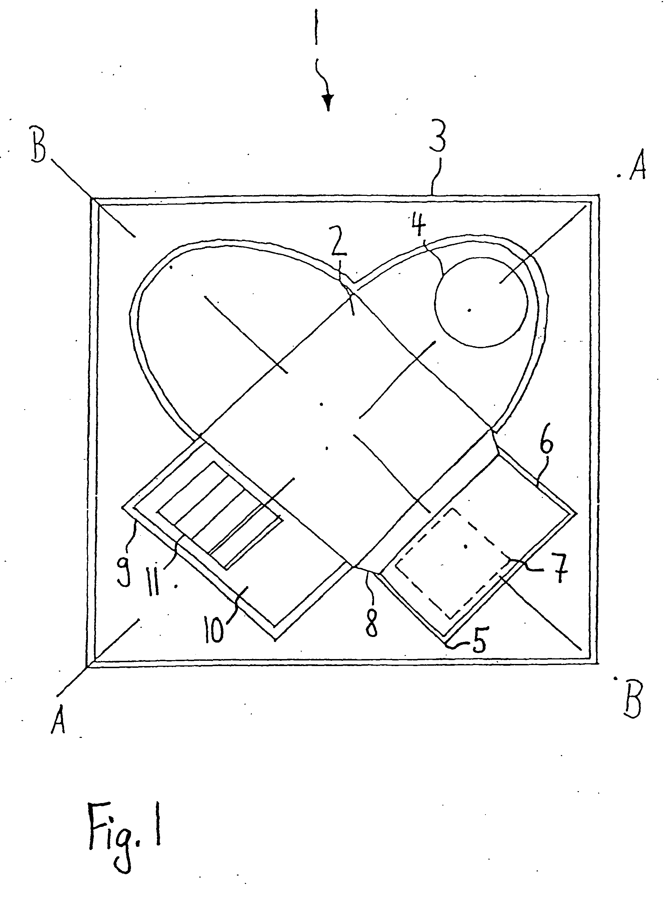

Figur 1 zeigt eine schematische Darstellung einer Draufsicht auf eine Luftaustauschvorrichtung 1 gemäß einem Ausführungsbeispiel.

Die Luftaustauschvorrichtung 1 ist von einem quadratischen Gehäuse 3 umschlossen. Bei der in Figur 1 gezeigten Draufsicht ist die Vorderseite des Gehäuses 3 abgenommen. Das Gehäuse 3 weist im Ausführungsbeispiel Kunststoff auf, ist aber auch aus anderen Materialien fertigbar.

Mittig in dem Gehäuse 3 ist ein quadratischer Plattenwärmetauscher 2 angeordnet, insbesondere aus gut wärmeleitendem Metall, wobei in der Draufsicht gemäß Figur 1 nur die oberste Platte des Plattenwärmetauschers 2 sichtbar ist. Die Seitenlänge des Plattenwärmetauschers 2 entspricht knapp der Hälfte der Seitenlänge des Gehäuses 3. Der Plattenwärmetauscher 2 ist in einem Winkel von 45° bezogen auf das Gehäuse 3 gedreht angeordnet.

Oberhalb der rechten oberen Seite des Plattenwärmetauschers 2 ist eine kreisrunde Außenlufteinlaßöffnung 4 in der Unterseite des Gehäuses 3 vorgesehen. Um die Außenlufteinläßöffnung 4 ist eine auf der Unterseite des Gehäuses 3 aufsetzende, gekrümmte Wand vorgesehen, die am oberen sowie am unteren Ende der rechten oberen Seite des Plattenwärmetauschers 2 abschließt.

Auf der linken oberen Seite des Plattenwärmetauschers 2 ist eine ähnlich geformte Wand vorgesehen, die am oberen sowie am unteren Ende der linken oberen Seite des Plattenwärmetauschers 2 abschließt. In der hier nicht gezeigten Vorderseite des Gehäuses 3 ist eine Öffnung vorgesehen, die beim Aufsetzen der Vorderseite auf das Gehäuse 3 innerhalb dieser Wand angeordnet ist.

An der rechten unteren Seite des Plattenwärmetauschers 2 ist ein Fortluft-Lüftergehäuse 5 mit einem Fortluftradiallüfter 6 sowie ein zwischen dem Fortluftradiallüfter 6 und dem Plattenwärmetauscher 2 angeordneter Trichter 8 vorgesehen. Der Trichter 8 setzt auf der gesamten Breite der rechten unteren Seite des Plattenwärmetauschers 2 an und verjüngt sich auf einer Strecke etwa einem Achtel der Seitenlänge des Plattenwärmetauschers 2 um einen Winkel von 30°. Auf der gesamten Breite des Auslaßseite des Trichters 8 setzt der Fortluftradiallüfter 6 an, von dem in der Draufsicht in Figur 1 lediglich die Verkleidung erkennbar ist. Die Drehachse des Fortluftradiallüfters 6 ist dabei senkrecht auf der Höhe der Mitte der rechten unteren Seite des Plattenwärmetauschers 2 ausgerichtet. Der Durchmesser bzw. die Breite des Fortluftradiallüfters 6 entspricht dabei in etwa der Auslaßseite des Trichters 8. Die Tiefe des Fortluftradiallüfters 6 entspricht ungefähr der Hälfte seiner Breite. Der Fortluftradiallüfter 6 ist von einem Fortluft-Lüftergehäuse 5 umschlossen, das auf seiner Unterseite eine in Figur 1 gestrichelt dargestellte, rechteckige Fortluftauslaßöffnung 7 aufweist. Diese Fortluftauslaßöffnung 7 ist dabei von der Mitte des Fortluftradiallüfters 6 ausgehend etwas nach rechts oben versetzt angeordnet.

An der linken unteren Seite des Plattenwärmetauschers 2 setzt ein von einem dünnwandigen Zuluft-Lüftergehäuse 9 umschlossener Zuluftansaugradiallüfter 10 an. Dabei ist die Drehachse des Zuluftansaugradiallüfters 10 orthogonal zu der linken unteren Seite des Plattenwärmetauschers 2 auf der Höhe deren Mitte angeordnet. Der Durchmesser bzw. die Breite des Zulaufansaugradiallüfters 10 entspricht in etwa der Seitenlänge des Plattenwärmetauschers 2, seine Tiefe entspricht ungefähr der Hälfte seiner Breite. In dem linken oberen Bereich des Zuluftansaugradiallüfters 10 ist eine rechteckige Zulufteinlaßöffnung angeordnet, durch die mehrere Lüfterschaufeln des Zuluftansaugradiallüfters 10 erkennbar sind. Diese sind im Ausführungsbeispiel parallel zur Drehachse des Zuluftansaugradiallüfters 10 angeordnet, können jedoch auch schräg zu dieser oder gekrümmt verlaufen.

Ein erste Schnittlinie A-A verläuft durch die linke untere sowie durch die rechte obere Ecke des Gehäuses 3. Eine weitere Schnittlinie B-B verläuft durch die linke obere sowie durch die rechte untere Ecke des Gehäuses 3.

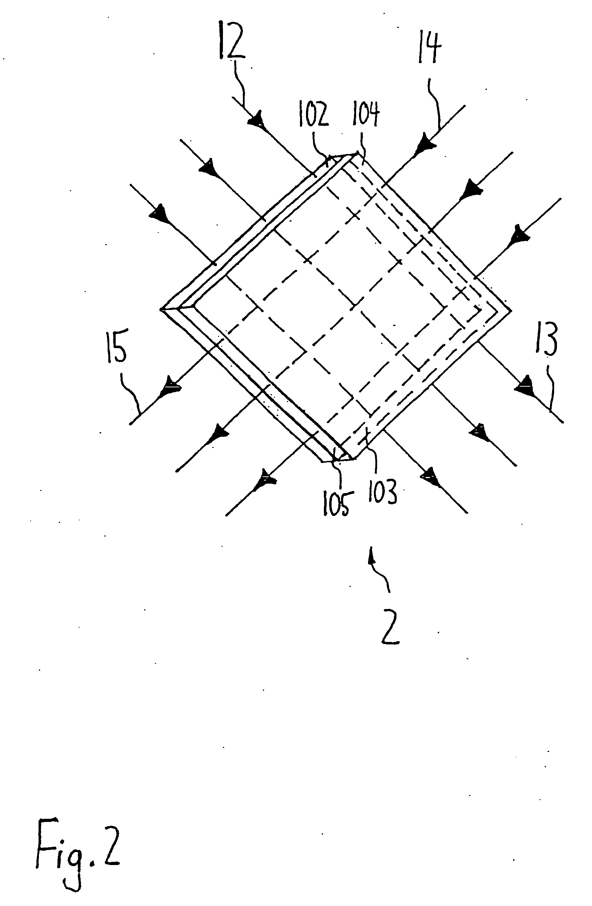

Figur 2 zeigt eine schematische, perspektivische Darstellung des in Figur 1 gezeigten Plattenwärmetauschers 2 sowie eine grafische Veranschaulichung der den Plattenwärmetauscher 2 durchfließenden Luftströme gemäß dem Ausführungsbeispiel.

Der Plattenwärmetauscher 2 umfaßt drei übereinander angeordnete, quadratische Metallplatten, die in Figur 2 jeweils auf einer Ecke stehend dargestellt sind. Die untere und die mittlere Platte des Plattenwärmetauschers 2 weisen auf der linken oberen Seite einen schlitzartigen Warmlufteinlaß 102 und auf der rechten unteren Seite einen schlitzartigen Kaltluftauslaß 103 auf. Auf der linken unteren sowie auf der rechten oberen Seite ist die untere Platte mit der mittleren Platte des Plattenwärmetauschers 2 jeweils mit einer durchgehenden Wand verbunden. An der rechten oberen Seite des Plattenwärmetauschers 2 befindet sich zwischen der mittleren und der oberen Platte ein schlitzartiger Kaltlufteinlaß 104. An der linken unteren Seite des Plattenwärmetauschers 2 ist zwischen der mittleren und der oberen Platte des Plattenwärmetauschers 2 ein schlitzartiger Warmluftauslaß 105 vorgesehen. An der linken oberen sowie an der rechten unteren Seite des Plattenwärmetauschers 2 ist zwischen der mittleren und der oberen Platte jeweils eine Wand vorgesehen.

Gemäß der Darstellung in Figur 2 fließt ein Abluftstrom 12 in den Warmlufteinlaß 102 hinein, durchströmt den Plattenwärmetauscher 2 und tritt auf der gegenüberliegenden Seite als Fortluftstrom 13 aus dem Kaltluftauslaß 103 aus. Der dabei von dem Abluftstrom 12 durchflossene Bereich des Plattenwärmetauschers 2 wird auch als Abkühlseite bezeichnet. Ein Außenluftstrom 14 tritt durch den Kaltlufteinlaß 104 in den Plattenwärmetauscher 2 ein, durchströmt diesen und tritt als Zuluftstrom 15 auf der gegenüberliegenden Seite aus dem Warmluftauslaß 105 aus. Der dabei von dem Außenluftstrom 14 durchflossenen Bereich des Plattenwärmetauschers 2 wird auch Erwärmseite des Plattenwärmetauschers 2 genannt.

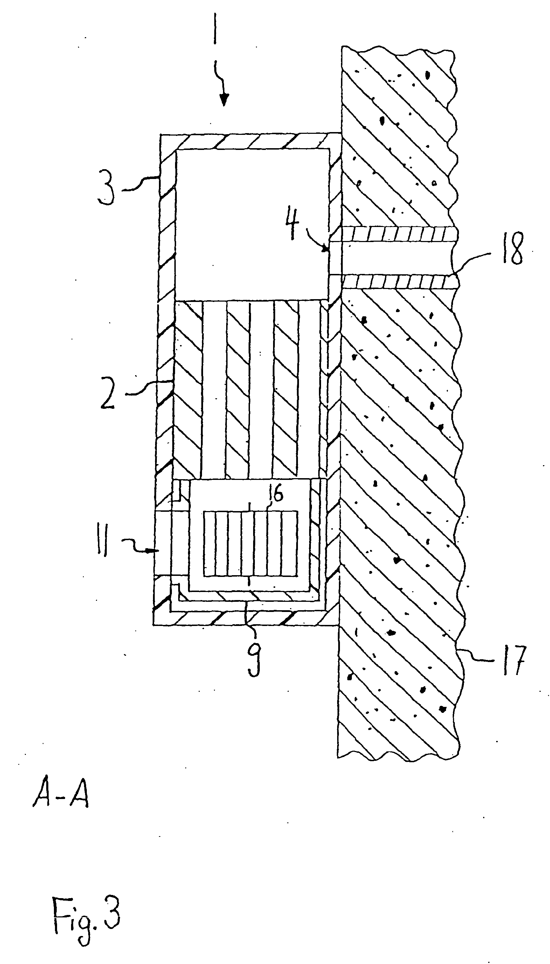

Figur 3 zeigt eine schematische Darstellung eines Querschnitts entlang der Schnittlinie A-A einer an einer Außenwand 17 befestigten Luftaustauschvorrichtung 1 gemäß dem Ausführungsbeispiel. In Figur 3 ist die Erwärmseite des Plattenwärmetauschers 2 betrachtet.

Die Luftaustauschvorrichtung 1 liegt mit der Rückseite ihres. Gehäuses 3 an der Vorderseite der Außenwand 17 an und befindet sich dementsprechend im Gebäudeinneren. Aus der Querschnittsdarstellung in Figur 3 ist ersichtlich, daß die diagonale Höhe des Luftaustauschsystems 1 in etwa dem Dreifachen seiner Tiefe entspricht. Dabei gliedert sich das Innere des Gehäuses 3 in einen zuoberst angeordneten Außenlufteinlaßbereich, in einen mittig angeordneten Plattenwärmetauscherbereich und in einen zuunterst angeordneten Zuluftauslaßbereich.

In dem Außenlufteinlaßbereich ist an der Rückseite des Gehäuses 3 die Außenlufteinlaßöffnung 4 ausgebildet, an die sich außenwandseitig ein waagerechtes Außenluftzufuhrrohr 18 anschließt. In dem Plattenwärmetauscherbereich ist der Plattenwärmetauscher 2 angeordnet, der drei parallele, in der Darstellung gemäß Figur 3 von oben nach unten verlaufende Luftführungen aufweist. Der hier gezeigte Plattenwärmetauscher 2 entspricht prinzipiell dem Plattenwärmetauscher 2 aus Figur 2, weist jedoch acht übereinander angeordnete Platten auf. In dem Zuluftauslaßbereich ist ein Zuluft-Lüfterrad 16 innerhalb des Zuluft-Lüftergehäuses 9 angeordnet. Das Zuluft-Lüfterrad 16 ist dabei horizontal mittig angeordnet. Auf gleicher Höhe mit den Lüfterschaufeln des Zuluft-Lüfterrads 16 ist in der Vorderseite des Gehäuses 3 sowie in der linken Seite des Zuluft-Lüftergehäuses 9 eine Zuluftauslaßöffnung 11 vorgesehen, deren Höhe der Breite der Lüfterschaufeln entspricht.

Das Zuluft-Lüftergehäuse setzt auf dem linken sowie auf dem rechten Ende der Unterseite des Plattenwärmetauschers 2 an, verläuft beidseitig vertikal nach unten und weist unmittelbar vor der Unterseite des Gehäuses 3 eine waagerechte Unterseite auf.

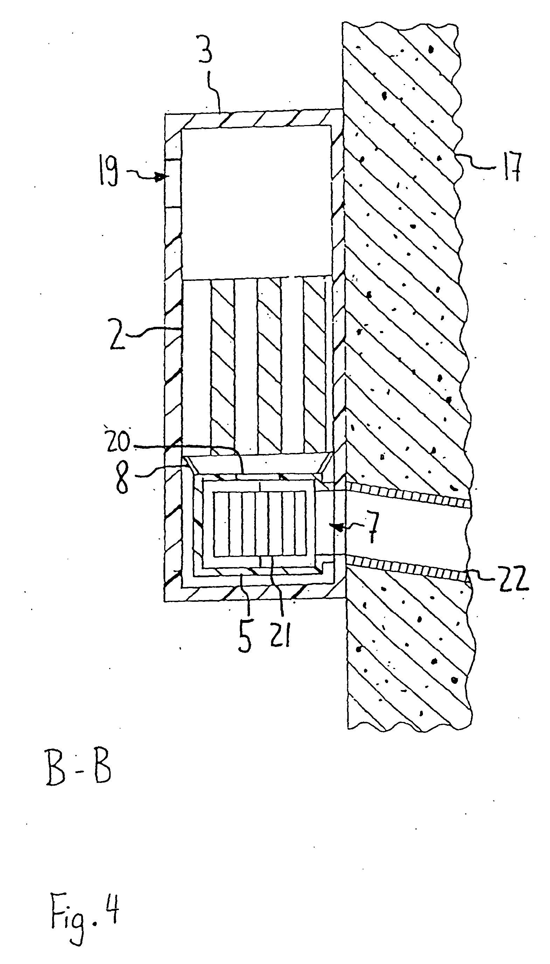

Figur 4 zeigt eine schematische Darstellung eines Querschnitts entlang der Schnittlinie B-B des an der Außenwand 17 befestigten Luftaustauschsystems 1 gemäß dem Ausführungsbeispiel. In Figur 4 ist die Abkühlseite des Plattenwärmetauschers 2 betrachtet.

Das Innere des Gehäuses 3 gliedert sich dabei in einen oberen Ablufteinlaßbereich, in einen mittleren Plattenwärmetauscherbereich und in einen unteren Fortluftauslaßbereich. Im Ablufteinlaßbereich ist auf der Vorderseite des Gehäuses 3 eine Ablufteinlaßöffnung 19 vorgesehen. Im Plattenwärmetauscherbereich ist der Plattenwärmetauscher 2 angeordnet, der vier parallele, vertikal verlaufende Luftführungen aufweist. Der hier gezeigte Plattenwärmetauscher 2 entspricht prinzipiell dem Plattenwärmetauscher 2 aus Figur 2, weist jedoch acht übereinander angeordnete Platten auf. Der Fortluftauslaßbereich umfaßt einen hinsichtlich der Bauart, hinsichtlich der Größe und hinsichtlich der Ausrichtung mit dem in Figur 3 gezeigten Zuluftlüfterrad 16 identisches Fortlüftlüfterrad 21. Das Fortluft-Lüfterrad 21 ist zentriert innerhalb des Fortluft-Lüftergehäuses 5 angeordnet. Horizontal auf gleicher Höhe mit dem Fortluft-Lüfterrad 21 weist das Fortluft-Lüftergehäuse 5 auf der rechten Seite sowie das Gehäuse 3 auf seiner Rückseite jeweils eine Fortluftauslaßöffnung 7 auf. An dieser Fortluftauslaßöffnung 7 setzt ein Fortluftauslaßrohr 22 an, das leicht nach rechts unten geneigt verläuft. Mittig auf der Oberseite des Fortluft-Lüftergehäuses 5 ist eine Fortluftzuführungsöffnung 20 vorgesehen, deren Breite ungefähr einem Drittel der Gesamtbreite des Fortluft-Lüftergehäuses 5 entspricht. Zwischen dem linken und dem rechten Ende der Unterseite des Plattenwärmetauschers 2 und der linken und rechten Seite der Oberseite des Fortluft-Lüftergehäuses 5 ist der Trichter 8 angeordnet.

Im folgenden wird die Funktionsweise der Luftaustauschvorrichtung 1 näher erläutert.

Wie in Figur 2 beschrieben, besteht zwischen dem Abluftstrom 12 und dem Außenluftstrom 14 ein Temperaturgefälle, das im Betrieb der Luftaustauschvorrichtung 1 durch den Plattenwärmetauscher 2 reduziert wird. Dabei wird der Abluftstrom 12 abgekühlt und der Außenluftstrom 14 erwärmt. Der Abluftstrom 12 sondert bei der Abkühlung Kondenswasser ab, das an der Abkühlseite des Plattenwärmetauschers 2, insbesondere an dem Kaltluftauslaß 103 auftritt.

Wie in Figur 1 sowie in Figur 3 dargestellt, wird durch den Zuluftansaugradiallüfter 10 bzw. durch das Zuluftlüfterrad 16 kalte Außenluft angesaugt. Dieser Außenluftstrom 14 tritt durch das in Figur 3 gezeigte Außenluftzufuhrrohr 18 in die Luftaustauschvorrichtung 1 ein. Dann strömt der Außenluftstrom 14 durch die Luftführungen des Plattenwärmetauschers 2 und wird dabei erwärmt. Anschließend fließt die nun als Zuluftstrom 15 bezeichnete, erwärmte Luft durch die Zuluftauslaßöffnung 11 auf der Gehäusevorderseite 26 in das Gebäudeinnere.

Wie in Figur 1 und in Figur 4 ersichtlich, saugt der Fortluftradiallüfter 6 bzw. das Fortluft-Lüfterrad 21 durch die Bewegung der Lüfterschaufeln 23 gleichzeitig dazu warme Abluft aus dem Gebäudeinneren an. Dieser Abluftstrom 12 fließt in die Luftführungen des Plattenwärmetauschers 2. Beim Durchströmen des Plattenwärmetauschers 2 wird der Abluftstrom 12 gekühlt. Der Abluftstrom 12 gelangt danach durch den Trichter 8 und durch die Fortluftzuführungsöffnung 20 in das Fortluft-Lüftergehäuse 5. Von dort aus wird die nun als Fortluftstrom 13 bezeichnete Luft - in Folge der Bewegung des Fortluft-Lüfterrads 21 sowie in Folge der Druckdifferenz, die zwischen dem Innenraum des Fortluft-Lüfterrads 21 und dem außerhalb der Fortluftauslaßöffnung 7 gelegenen Bereich herrscht - durch die Fortluftauslaßöffnung 7 aus der Luftaustauschvorrichtung 1 sowie durch das Fortluftauslaßrohr 22 auf eine Außenseite des Gebäudes befördert.

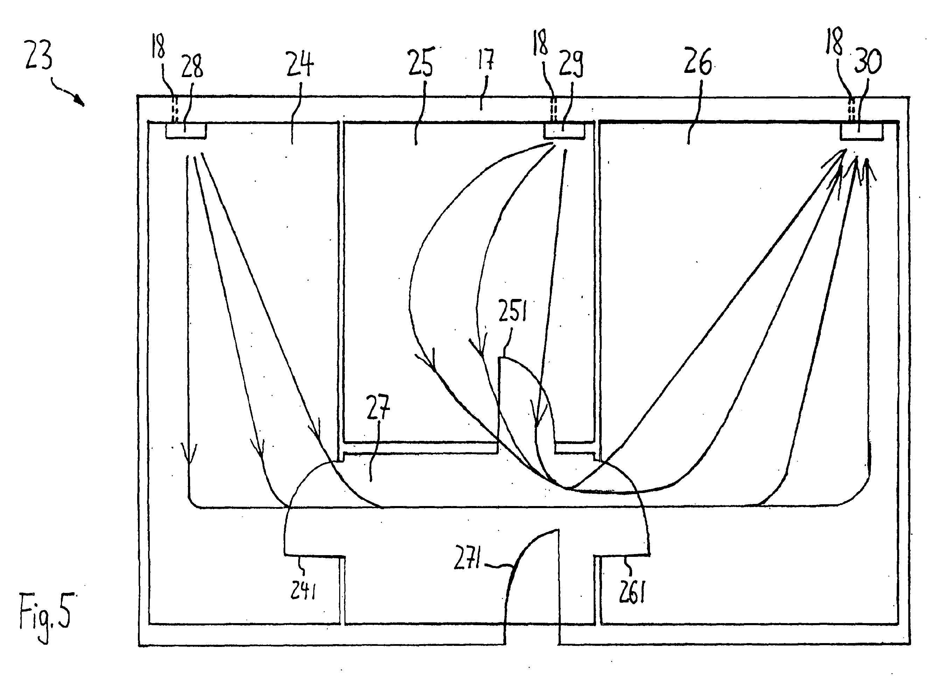

Figur 5 zeigt einen schematischen Grundriß eines Gebäudeabschnitts 23 mit drei an der Innenseite der Außenwand 17 dieses Gebäudeabschnitts 23 befestigten Luftaustauschvorrichtungen 28, 29 und 30 gemäß einem ersten Ausführungsbeispiel.

Der Gebäudeabschnitt 23 weist eine rechteckige längliche Form auf und gliedert sich in einen ersten Raum 24, in einen zweiten Raum 25, in einen dritten Raum 26 sowie in einen vierten Raum 27. Der erste Raum 24 weist eine rechteckige Form auf, befindet sich in dem linken Viertel des Gebäudeabschnitts 23 und erstreckt sich über die gesamte Tiefe des Gebäudeabschnitts 23. Die linke, die vordere und die hintere Begrenzung des ersten Raums 24 werden von einem Abschnitt der Außenwand 17 gebildet. Auf der rechten Seite wird der erste Raum 24 von einer gerade verlaufenden Zwischenwand begrenzt, in deren vorderem Bereich eine erste Tür 241 angeordnet ist, die den ersten Raum 24 mit dem vierten Raum 27 verbindet. Der vierte Raum 27 weist eine Breite von einem guten Drittel der Gesamtbreite des Gebäudeabschnitts 23 und eine Tiefe von ungefähr einem Drittel der Gesamttiefe des Gebäudeabschnitts 23 auf. Ein Abschnitt der Außenwand 17 bildet das vordere Ende des vierten Raums 27. Hinter dem vierten Raum 27 befindet sich der zweite Raum 25, der von dem vierten Raum 27 durch eine gerade verlaufende Zwischenwand getrennt ist. In dem rechten Bereich dieser Zwischenwand ist eine zweite Tür 251 angeordnet, die den vierten Raum 27 mit dem zweiten Raum 25 verbindet. Rechterhalb des zweiten Raums 25 und rechterhalb des vierten Raums 27 befindet sich der dritte Raum 26. Dieser erstreckt sich über die gesamte Tiefe und über ein gutes Drittel der Gesamtbreite des Gebäudeabschnitts 23. Der dritte Raum 26 ist durch eine gerade verlaufende Zwischenwand von dem zweiten Raum 25 und von dem vierten Raum 27 getrennt, wobei in dem vorderen Bereich dieser Zwischenwand eine dritte Tür 261 zur Verbindung des dritten Raums 26 mit dem vierten Raum 27 angeordnet ist. An der Vorderseite des Gebäudeabschnitts 23 ist eine Eingangstür 271 vorgesehen, die in den vierten Raum 27 führt.

Eine erste Luftaustauschvorrichtung 28 befindet sich in einem linken Bereich der hinteren Wand des ersten Raums 24. Eine zweite Luftaustauschvorrichtung 29 ist in einem rechten Bereich der hinteren Wand des zweiten Raums 25 vorgesehen. Eine dritte Luftaustauschvorrichtung 30 ist in einem rechten Bereich der hinteren Wand des dritten Raums 26 angeordnet. Die Luftaustauschvorrichtungen 28 bis 30 sind jeweils mit ihrer Rückseite des Gehäuses 3 an die Innenseite der Außenwand 17 montiert. Dabei verlaufen hinter den Luftaustauschvorrichtungen 28 bis 30 jeweils ein Außenluftzufuhrrohr 18 sowie ein Fortluftauslaßrohr 22. Die Außenluftzufuhrrohre 18 sind in Figur 5 jeweils gestrichelt dargestellt. Die Luftaustauschvorrichtungen 28 bis 30 sind so an der Außenwand 17 befestigt, daß ihre Außenlufteinlaßöffnung 4 jeweils auf dem Außenluftzufuhrrohr 18 und ihre Fortluftauslaßöffnung 7 jeweils auf dem Fortluftauslaßrohr 22 anliegen.

Nachfolgend wird mit Bezug auf Figur 5 zunächst eine erste Variante des ersten Ausführungsbeispiels beschrieben, bei dem die zweite Tür 251 und die Eingangstür 271 geschlossen und die erste Tür 241 sowie die dritte Tür 261 geöffnet sind.

Die erste Luftaustauschvorrichtung 28, die zweite Luftaustauschvorrichtung 29 sowie die dritte Luftaustauschvorrichtung 30 fördern jeweils einen Zuluftstrom 15 in das Innere des Gebäudeabschnitts 23 und fördern gleichzeitig einen Fortluftstrom 13 aus dem Inneren des Gebäudeabschnitts 23 auf die hinter dem Gebäudeabschnitt 23 gelegene Außenseite des Gebäudeabschnitts 23.

Bei der zweiten Luftaustauschvorrichtung 29 drehen sich das Zuluft-Lüfterrad 16 und das Fortluft-Lüfterrad 21 mit derselben Drehfrequenz, so daß das Volumen des Zuluftstroms 15 mit dem Volumen des Fortluftstroms 13 übereinstimmt. Mit diesem Betriebsmodus der zweiten Luftaustauschvorrichtung 29 wird eine ausreichende Versorgung des zweiten Raums 25 mit frischer erwärmter Außenluft sichergestellt.

Das Zuluft-Lüfterrad 16 der ersten Luftaustauschvorrichtung 28 wird mit einer um 50% höheren Drehfrequenz betrieben als das Fortluft-Lüfterrad 21 der ersten Luftaustauschvorrichtung 28. Der durch die erste Luftaustauschvorrichtung 28 in den ersten Raum 24 geförderte Zuluftstrom 15 ist demnach um ungefähr 50% größer ausgebildet als der aus dem ersten Raum 24 auf die Außenseite des Gebäudeabschnitts 23 geförderte Fortluftstrom 13. Durch die erste Luftaustauschvorrichtung 28 wird demnach mehr frische Zuluft in den ersten Raum 24 befördert, als verbrauchte Fortluft aus ihm hinausbefördert wird.

Das Fortluft-Lüfterrad 21 der dritten Luftaustauschvorrichtung 30 wird mit einer um 50% höheren Drehfrequenz betrieben als das Zuluft-Lüfterrad 16 der dritten Luftaustauschvorrichtung 30. Dementsprechend ist das Volumen des aus dem dritten Raum 26 herausbeförderten Fortluftstroms 13 um ungefähr 50% größer ausgebildet als das Volumen des von der Außenseite des Gebäudeabschnitts 23 in den dritten Raum 26 hineinbeförderten Zuluftstroms 15. Durch die dritte Luftaustauschvorrichtung 28 wird somit weniger frische Zuluft in den dritten Raum 26 befördert, als verbrauchte Fortluft aus ihm hinausbefördert wird.

In dem Gebäudeabschnitt 23 entwickelt sich eine in Figur 5 mittels Pfeilen dargestellte Luftbewegung zwischen der ersten Luftaustauschvorrichtung 28 und der dritten Luftaustauschvorrichtung 30. Dabei sind die Pfeile, die in Figur 5 zwischen dem zweiten Raum 25 und dem dritten Raum 26 verlaufen, nicht zu beachten. Es entsteht ein Luftstrom, der sich, ausgehend von der ersten Luftaustauschvorrichtung 28, durch den ersten Raum 24, durch den vierten Raum 27 und durch den dritten Raum 26 bis zu der dritten Luftaustauschvorrichtung 30 erstreckt. Dadurch ist gewährleistet, daß der erste Raum 24 und der dritte Raum 26 sowie der zwischen diesen beiden Räumen angeordnete vierte Raum 27 mit frischer erwärmter Zuluft versorgt wird.

Im folgenden wird mit Bezug auf Figur 5 eine zweite Variante des zweiten Ausführungsbeispiels erläutert, bei dem die erste Tür 241, die zweite Tür 251 und die dritte Tür 261 geöffnet und die Eingangstür 271 geschlossen sind.

Dabei arbeiten sowohl bei der ersten Luftaustauschvorrichtung 28 sowie bei der zweiten Luftaustauschvorrichtung 29 die Zuluft-Lüfterräder 16 jeweils mit einer Drehfrequenz, die um ungefähr 25% höher ausgebildet ist als die Drehfrequenz der Fortluft-Lüfterräder 21. Dementsprechend wird von den Luftaustauschvorrichtungen 28 und 29 jeweils ungefähr 25% mehr Zuluft in das Innere des Gebäudeabschnitts 23 befördert, als Abluft hinausbefördert wird. Das Volumenverhältnis des Zuluftstroms 15 zu dem Fortluftstrom 13 beträgt bei den Luftaustauschvorrichtungen 28 und 29 jeweils 55:45.

Das Fortluft-Lüfterrad 21 der dritten Luftaustauschvorrichtung 30 dreht sich mit einer Drehfrequenz, die um ca. 50% größer ist, als die Drehfrequenz des Zuluft-Lüfterrads 16 der dritten Luftaustauschvorrichtung 30. Der von der dritten Luftaustauschvorrichtung 30 in den dritten Raum 26 geförderte Zuluftstrom 15 ist daher um ca. 50% geringer ausgebildet als der gleichzeitig aus dem dritten Raum 26 auf die Außenseite des Gebäudeabschnitts 23 beförderte Fortluftstrom 13. Das Verhältnis des Zuluftstroms 15 zu dem Fortluftstrom 13 beträgt ungefähr 40:60.

Durch diesen Betriebsmodus der Luftaustauschvorrichtungen 28-30 wird eine Versorgung der Räume 24 bis 27 mit frischer unverbrauchter Außenluft gewährleistet. Dabei wird auch der vierte Raum 27 durchlüftet, in dem sich nicht unmittelbar eine Luftaustauschvorrichtung befindet. Die Luftbewegung verläuft von der ersten Luftaustauschvorrichtung 28 durch den ersten Raum 24, durch den vierten Raum 27 und durch den dritten Raum 26 zu der dritten Luftaustauschvorrichtung 30 sowie von der zweiten Luftaustauschvorrichtung 29 über den zweiten Raum 25, über den vierten Raum 27 und über den dritten Raum 26 zu der dritten Luftaustauschvorrichtung 30. Diese Luftbewegungen sind in Figur 5 mittels Pfeilen dargestellt.

Diese Luftbewegungen können sehr einfach modifiziert werden, indem die Drehfrequenzen der Zuluft-Lüfterräder 16 sowie der Fortluft-Lüfterräder 21 der Luftaustauschvorrichtungen 28-30 verändert werden.

In weiteren, hier nicht gezeigten Varianten des ersten Ausführungsbeispiels können auch größere Gebäudeabschnitte 23 mit den erfindungsgemäßen Luftaustauschvorrichtungen belüftet werden. Dabei kann auch eine weit größere Zahl von Luftaustauschvorrichtungen zum Einsatz kommen, wobei ein Luftaustauschsystem mit einer geraden Anzahl von Luftaustauschvorrichtungen besonders effektiv arbeitet.

### Bezugszeichenliste

- 1: Luftaustauschvorrichtung
- 2: Plattenwärmetauscher
- 3: Gehäuse
- 4: Außenlufteinlaßöffnung
- 5: Fortluft-Lüftergehäuse
- 6: Fortluftradiallüfter
- 7: Fortluftauslaßöffnung
- 8: Trichter
- 9: Zuluft-Lüftergehäuse
- 10: Zuluftansaugradiallüfter
- 11: Zuluftauslaßöffnung
- 12: Abluftstrom
- 13: Fortluftstrom
- 14: Außenluftstrom
- 15: Zuluftstrom
- 102: Warmlufteinlaß
- 103: Kaltluftauslaß
- 104: Kaltlufteinlaß
- 105: Warmluftauslaß
- 16: Zuluft-Lüfterrad
- 17: Außenwand
- 18: Außenluftzufuhrrohr
- 19: Ablufteinlaßöffnung
- 20: Fortluftzuführungsöffnung
- 21: Fortluft-Lüfterrad
- 22: Fortluftauslaßrohr
- 23: Gebäudeabschnitt
- 24: erster Raum
- 241: erste Tür
- 25: zweiter Raum
- 251: zweite Tür
- 26: dritter Raum
- 261: dritte Tür
- 27: vierter Raum
- 271: Eingangstür
- 28: erste Luftaustauschvorrichtung
- 29: zweite Luftaustauschvorrichtung
- 30: dritte Luftaustauschvorrichtung

## Patentansprüche

1. Luftaustauschsystem für die Belüftung wenigstens eines Raums (24-27) eines Gebäudes (23) mit wenigstens zwei Luftaustauschvorrichtungen (28-30), die jeweils die folgenden Merkmale aufweisen:
- ein Gehäuse (3),
- ein in dem Gehäuse (3) angeordneter elektrischer Zuluft-Lüfter (16) zur Förderung eines Zuluftstroms (15),
- ein weiterer in dem Gehäuse (3) angeordneter elektrischer Fortluft-Lüfter (21) zur Förderung eines Fortluftstroms (13),
- ein in dem Gehäuse (3) angeordneter Wärmetauscher (2), durch dessen Erwärmseite der Zuluftstrom (15) und durch dessen Abkühlseite der Fortluftstrom (13) fließt,
wobei das Luftaustauschsystem zum Erzeugen einer Luftbewegung zwischen wenigstens einer Luftaustauschvorrichtung und wenigstens einer weiteren Luftaustauschvorrichtung derart ausgebildet ist, dass bei der einen Luftaustauschvorrichtung (28,29) der Zuluft-Lüfter (16) und der Fortluft-Lüfter (21) so eingestellt sind, dass der Zuluftstrom (15) größer als der Fortluftstrom (13) ausgebildet ist, und
dass bei der weiteren Luftaustauschvorrichtung (30) der Zuluft-Lüfter (16) und der Fortluft-Lüfter (21) so eingestellt sind, dass der Fortluftstrom (13) größer als der Zuluftstrom (15) ausgebildet ist.

2. Luftaustauschsystem nach Anspruch 1 mit wenigstens einer Außenwand (17) des Gebäudes (23),
**dadurch gekennzeichnet, daß**
die Gehäuserückseiten der Luftaustauschvorrichtungen (28-30) an wenigstens einer Außenwand (17) angebracht sind und daß an bzw. in der Außenwand (17) wenigstens eine Rohrverbindung (18,22) zu der Außenseite des Gebäudes (23) vorgesehen ist.

3. Luftaustauschsystem nach Anspruch 2,
**dadurch gekennzeichnet, daß**
wenigstens eine Luftaustauschvorrichtung (28-30) an einer ersten Außenwand und wenigstens eine weitere Luftaustauschvorrichtung (28-30) an einer insbesondere gegenüber der ersten Außenwand liegenden zweiten Außenwand angebracht sind.

4. Luftaustauschsystem nach Anspruch 3,
**dadurch gekennzeichnet, daß**
sich die erste Außenwand (17) und die zweite Außenwand (17) in unterschiedlichen Räumen (24-26) des Gebäudes (23) befinden.

5. Luftaustauschsystem nach Anspruch 4,
**dadurch gekennzeichnet, daß**
zwischen der ersten Außenwand (17) und der zweiten Außenwand (17) wenigstens ein Durchgang und/oder wenigstens ein weiterer Raum (27) angeordnet ist.

6. Luftaustauschsystem nach Anspruch 2,
**dadurch gekennzeichnet, daß**
eine Steuerungseinheit vorgesehen ist, die derart mit wenigstens einer Luftaustauschvorrichtung (28-30) verbunden ist, daß die Drehfrequenz und/oder der Anstellwinkel der Lüfterblätter des Zuluft-Lüfters (16) und/oder die Drehfrequenz und/oder der Anstellwinkel der Lüfterblätter des Fortluft-Lüfters (21) veränderbar ist bzw. sind.

7. Gebäude (23) mit wenigstens einem Raum (24-27), wobei ein Luftaustauschsystem nach einem der vorhergehenden Ansprüche für die Belüftung vorgesehen ist.

8. Verfahren zur Belüftung wenigstens eines Raums (24-27) eines Gebäudes (23) mit wenigstens zwei Luftaustauschvorrichtungen (28-30), wobei das Verfahren bei jeder Luftaustauschvorrichtung (28-30) die Förderung eines Zuluftstroms (15) in den Raum, die Förderung eines Fortluftstroms (13) aus dem Raum, sowie das Wärmetauschen des Zuluftstroms (15) mit dem Fortluftstrom (13) vorsieht,
wobei ferner bei wenigstens einer Luftaustauschvorrichtung (28, 29) der Zuluftstrom (15) größer als der Fortluftstrom (13) ausgebildet ist und wobei bei wenigstens einer weiteren Luftaustauschvorrichtung (30) der Fortluftstrom (13) größer als der Zuluftstrom (15) ausgebildet ist.

## Claims

1. Air exchange system for the ventilation of at least one room (24-27) of a building (23) with at least two air exchange devices (28-30), which respectively comprise the following features:
- a casing (3),
- an electric air ventilator (16) which is arranged in the casing (3) for conveying a supply air current (15),
- a further electric exhaust air ventilator (21) for conveying an exhaust air current,
- a heat exchanger (2) which is arranged in the casing (3), wherein the supply air current (15) flows through the heating side of the heat exchanger (2) and wherein the exhaust air current (13) flows through the cooling side of the heat exchanger (2),
wherein the air exchange system for the generation of an air movement between at least one air exchange device and at least one further air exchange device is designed in such a way that at the first air exchange device (28, 29) the supply air ventilator (16) and the exhaust air ventilator (21) are configured such that the supply air current (15) is greater than the exhaust air current (13) and that, at the further air exchange device (30), the supply air ventilator (16) and the exhaust air ventilator (21) are configured such that the exhaust air current (13) is greater than the supply air current (15).

2. Air exchange system according to claim 1 with at least one outer wall (17) of a building (23),
**characterized in that**
the rear sides of the casings of the air exchange systems (28-30) are arranged at at least one outer wall (17) and **in that** at least one pipe connection (18, 22) to the outer side of the building (23) is provided on or, respectively, in the outer wall (17).

3. Air exchange system according to claim 2,
**characterized in that**
at least one air exchange device (28-30) is arranged at a first outer wall and at least one further air exchange device (28-30) is arranged at a second outer wall that is situated in particular vis-à-vis the first outer wall.

4. Air exchange system according to claim 3,
**characterized in that**
the first outer wall (17) and the second outer wall (17) are situated in different rooms (24-26) of the building (23).

5. Air exchange system according to claim 4,
**characterized in that**
between the first outer wall (17) and the second outer wall (17) at least one passage and/or at least one further room (27) is arranged.

6. Air exchange system according to claim 2,
**characterized in that**
a control unit is provided, the control unit being connected to at least one air exchange device (28-30) such that the rotation frequency and/or the angle of attack of the supply air ventilator's (16) fan blades and/or the rotation frequency and/or the angle of attack of the exhaust air ventilator's (21) fan blades can be altered.

7. Building (23) with at least one room (24-27),
wherein an air exchange system according to one of the previous claims is provided for ventilation.

8. Method for the ventilation of at least one room (24-27) of a building (23) with at least two air exchange devices (28-30), wherein the method provides for each air exchange device (28-30) the transportation of a supply air current (15) into the room, the transportation of an exhaust air current (13) out of the room, as well as the heat exchange of the supply air current (15) with the exhaust air current (13), wherein furthermore for at least one air exchange device (28, 29) the supply air current (15) is greater than the exhaust air current (13), and wherein for at least a further air exchange device (30) the exhaust air current (13) is greater than the supply air current (15).

## Revendications

1. Système d'échange d'air pour ventiler au moins une chambre (24-27) d'un bâtiment (23) avec au moins deux dispositifs d'échange d'air (28-30), qui, respectivement, comprennent les caractéristiques suivantes:
- un boîtier (3)
- un ventilateur électrique d'air amené (16) qui est arrangé dans le boîtier (3) pour transporter un courant d'air amené (15)
- un autre ventilateur électrique d'air sortant (21) pour la transporter un courant d'air sortant (13),
- un échangeur de chaleur (2) qui est arrangé dans le boîtier (3), dont le courant d'air amené (15) coule à travers de la zone de chauffage dudit échangeur et dont le courant d'air sortant (13) coule à travers de la zone de refroidissement dudit échangeur,
dans lequel le système d'échange d'air pour générer un mouvement d'air entre au moins un dispositif d'échange d'air et au moins un autre dispositif d'échange d'air est conçu de manière que le ventilateur d'air amené (16) et le ventilateur d'air sortant (21) d'un dispositif d'échange d'air (28, 29) soient configurés tel que le courant d'air amené (15) soit plus grand que le courant d'air sortant (13) et de manière que le ventilateur d'air amené (16) et le ventilateur d'air sortant (21) de l'autre dispositif d'échange d'air (30) soient configurés tel que le courant d'air sortant (13) soit plus grand que le courant d'air amené (15).

2. Système d'échange d'air selon revendication 1 avec au moins un mur extérieur (17) du bâtiment (23),
**caractérisé en ce que**
les faces arrières des boîtiers des dispositifs d'échange d'air (28-30) sont arrangées à au moins un mur extérieur (17) et **en ce que** au moins une connexion de tuyau (18, 22) vers la face externe du bâtiment (23) est pourvue à ou dans le mur extérieur (17).

3. Système d'échange d'air selon revendication 3,
**caractérisé en ce que**,
au moins un dispositif d'échange d'air (28-30) est arrangé à un mur extérieur premier et **en ce que** au moins un autre dispositif d'échange d'air (28-30) est arrangé à un mur extérieur second qui est en particulier situé en face du mur extérieur premier.

4. Système d'échange d'air selon revendication 3,
**caractérisé en ce que**
le mur extérieur premier (17) et le mur extérieur second (17) sont situés dans des chambres (24-26) différentes du bâtiment (23).

5. Système d'échange d'air selon revendication 4,
**caractérisé en ce que**
au moins un passage et/ou au moins une autre chambre est situé entre le premier mur extérieur (17) et le second mur extérieur (17).

6. Système d'échange d'air selon revendication 2,
**caractérisé en ce que**
une unité de commande est pourvue, qui est connecté avec au moins un dispositif d'échange d'air (28-30) de sorte que la fréquence de rotation et/ou l'angle d'attaque des pales de ventilateur du ventilateur d'air amené (16) et/ou la fréquence de rotation et/ou l'angle d'attaque des pales de ventilateur du ventilateur d'air sortant (21) soient changeables.

7. Bâtiment (23) avec au moins une chambre (24-27),
dans lequel un système d'échange d'air selon une des revendications précédentes est pourvu pour la ventilation.

8. Procédé pour ventiler au moins une chambre (24-27) d'un bâtiment (23) avec au moins deux dispositifs d'échange d'air (28-30), dans lequel le procédé pourvoit pour chacun des dispositifs d'échange d'air (28-30) le transport d'un courant d'air amené (15) dans la chambre, le transport d'un courant d'air sortant (13) hors de la chambre, ainsi que l'échange de chaleur du courant d'air amené (15) avec le courant d'air sortant (13),
dans lequel en outre pour au moins un dispositif d'échange d'air (28, 29) le courant d'air amené (15) est plus grand que le courant d'air sortant (13) et dans lequel pour au moins un autre dispositif d'échange d'air (30) le courant d'air sortant (13) est plus grand que le courant d'air amené (15).
